(19) Europäisches Patentamt
European Patent Office
Office européen des brevets

(11) Publication number: 0 220 351
A1

(12) # EUROPEAN PATENT APPLICATION

(21) Application number: 85307621.4

(22) Date of filing: 22.10.85

(51) Int. Cl.4: E04G 1/34 , F16M 11/00 , B25H 1/06

(43) Date of publication of application:
06.05.87 Bulletin 87/19

(84) Designated Contracting States:
DE FR GB IT SE

(71) Applicant: Koffski, James R.
80 - 1929 Hwy. 97 S Kelowna
British Colombia V1Z 2Z1(CA)

(72) Inventor: Koffski, James R.
80 - 1929 Hwy. 97 S Kelowna
British Colombia V1Z 2Z1(CA)

(74) Representative: Arthur, Bryan Edward et al
Withers & Rogers 4 Dyer's Buildings Holborn
London EC1N 2JT(GB)

(54) Work support bracket.

(57) A bracket (1) for erecting a free standing support for a horizontal plank or platform for use as a saw horse, scaffolding, table or bench, using standard sizes of lumber has a leg clamp member which allows either of two standard lumber thicknesses to be used as legs. The bracket also can utilize a standard piece of lumber to act as a cross-member, thereby allowing the support to hold planks of any width and allows any amount of separation between the legs. Prior brackets were limited in the width of the supported plank and separation of the legs by the maximum width of the bracket, and could only safely use a single thickness of lumber as a leg.

Fig. 1

## WORK SUPPORT BRACKET

BACKGROUND OF THE INVENTION

Field of the Invention

The invention relates to adjustable platform brackets used to construct work supports such as saw horses or scaffolding from standard-sized lumber.

Description of the Prior Art

Adjustable platform brackets which utilize standard lumber to construct an adjustable saw horse, scaffold or other working platform are currently available. For example, Black & Decker Manufacturing Co. sells an adjustable platform bracket under the trade mark WORKHORSE as disclosed in United States patents Nos. 4,228,871 and 4,296,835, both entitled BRACKET, issued October 21, 1980 and October 27, 1981 respectively to Talbot Industries, Ltd. Such brackets have a cross-piece of fixed length joining two open-faced channel members which extend downwardly and outwardly from the cross-piece. Lengths of "2-by-4" lumber can be inserted into the channel members to form legs for the support which are clamped into appropriate positions by a sleeve or clamp. The clamp has teeth which are forced into the wood of the leg by the action of a spring on the clamp. The horizontal platform is held in position by moveable upstanding members designed to bear against the vertical sides of the platform.

A drawback with these brackets is that, because the cross-piece is of a fixed length, the maximum width of the platform is limited by the width of the cross-piece, and the overall minimum width of the work support is similarly limited to the fixed width of the bracket. Thus, even where a narrow plank is utilized, there must be enough space to accommodate the full width of the bracket and this can be inconvenient in restricted spaces or where the support must stand on a narrow surface. A further disadvantage of such brackets is that the range of thicknesses of the leg members which are used is limited by the depth and configuration of the channel members. In the case of the WORKHORSE, the minimum thickness of lumber which can be used as a leg support is essentially the same as the depth of the channel member as this is the limit to which the clamp member can penetrate the leg.

An adjustable platform bracket in which the cross-piece is of variable length is disclosed in the present inventor's United States patent No. 4,502,565 entitled WORK SUPPORT issued March 5, 1985. Unlike the WORKHORSE model in which the cross-piece is fixed but the position of the upstanding members which bear against the sides of the platform is variable, in the bracket disclosed in U.S. patent No. 4,502,565, the cross-piece is comprised of two telescoping members. This permits the overall width of the bracket to be reduced compared to the width of the WORKHORSE when a narrow plank is used for the work platform. In the case of this bracket, however, the maximum width of the support is still limited by the maximum combined width of the two telescoping cross-pieces and this therefore also limits the maximum separation of the legs. Also, the leg support members are designed for effectively receiving only lumber for the legs which is thicker than the open channel member or slightly less thick than the leg housing.

SUMMARY OF THE INVENTION

The present invention provides an adjustable platform bracket which can utilize a standard piece of lumber as the cross-piece and therefore provides an adjustable platform bracket which can be adapted to provide a support of greater width than existing brackets and can be utilized to construct benches, tables, platforms or frame works generally of highly variable width. The bracket members may be used as four separate units located at the four corners of the support or as two telescoping pairs of brackets. The invention also provides a leg clamp which is adapted to securely clamp legs having two substantially different thicknesses.

The invention provides a work support bracket member for constructing a support for supporting a substantially horizontal member between two pairs of said brackets which bracket member has a socket which receives one end of a cross-piece for connecting the bracket member to the second bracket member of the pair, a leg support which extends downwardly and outwardly from the socket, a clamp to secure a leg in the leg support, and some means of maintaining the horizontal member in position on the bracket member. In a preferred form, the leg support is an open-faced channel which opens in the direction opposite from the socket and the clamp has a handle for engaging and releasing the clamp, and a clamping member which pivots between two clamping positions. The clamping member has two sides forming a right angle, with one side longer than the other so that in the first clamping position the edges of the two sides of the clamping member engage the leg, while in the second clamping position only the edge of the longer side of the clamping member engages the leg.

Preferably the edges of the clamping member have teeth to engage the wooden leg. Also the means for maintaining the horizontal member in position on the bracket member may be an angle bar whose vertical side may bear against the side of the horizontal member. The bracket member of the invention may also include a cross-member which can telescope within the cross-member of the second bracket member of the pair of brackets so that the brackets can be used without a separate cross-piece.

BRIEF DESCRIPTION OF THE DRAWINGS

In drawings which illustrate a preferred embodiment of the invention:

Figure 1 is a perspective view from above of two of the bracket members of the invention assembled with a cross-piece and two leg members in place;

Figure 2 is a perspective view from below of two bracket members of the invention with a cross-piece in place;

Figure 3 is a perspective view from below of a single bracket member of the invention with a leg member in place;

Figure 4 is a perspective view of the bracket member of the invention showing the clamp member in position for clamping a thicker leg member;

Figure 5 is a perspective view of the bracket member of the invention showing the clamp member in position for clamping a thinner leg member; and

Figure 6 is a perspective view of the clamp member of the invention.

DETAILED DESCRIPTION OF A PREFERRED EMBODIMENT OF THE INVENTION

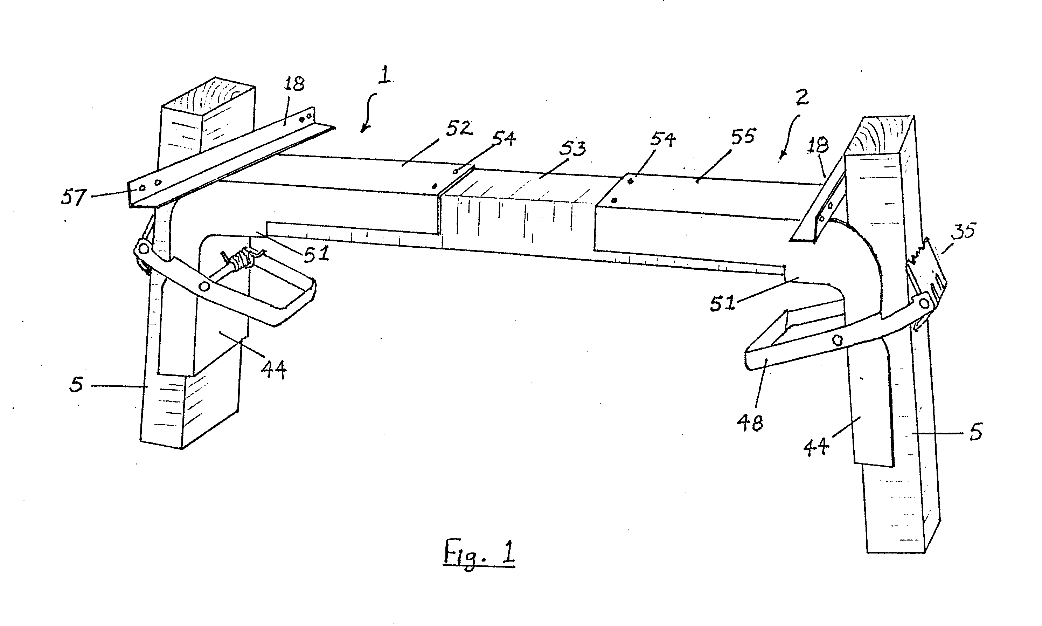

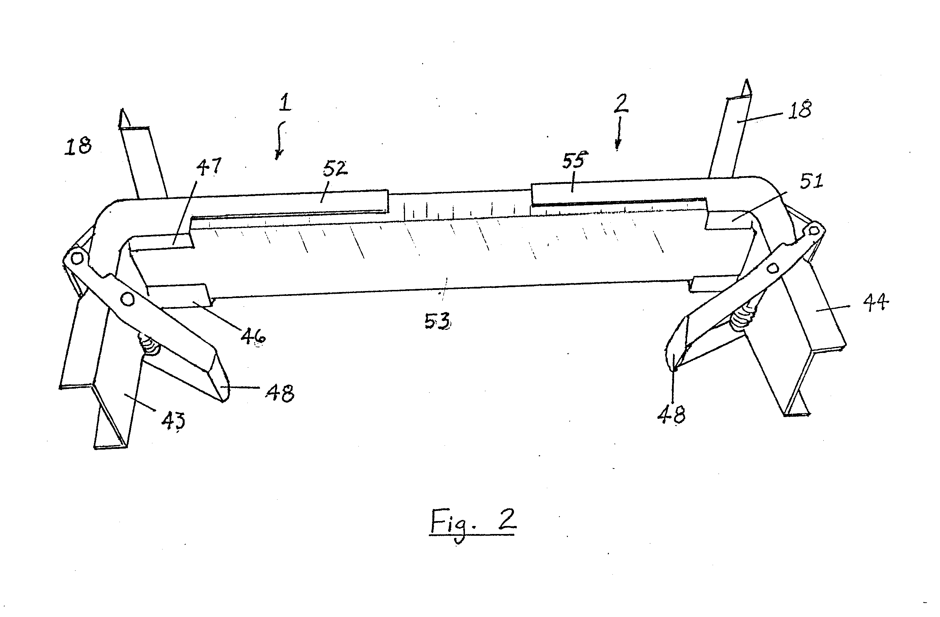

Referring to Figures 1 and 2, the bracket members of the invention are referred to generally as 1 and 2. Each bracket member consists of a leg support channel 44 joined to a horizontal rectangular socket 51. Preferably the socket and leg support channel are integral, but the socket may be fastened to the leg support by other means. In the preferred form, as described further below, the main part of the bracket is stamped from a single piece of metal.

The preferred form of the invention is adapted for using standard lumber sizes available in North America for the leg members and cross-pieces. These lumber sizes are referred to as "2-by-4" or "1-by-4", the cross-sectional dimensions of which in fact are roughly 1.5 inches by 3.5 inches (3.8 cm. by 8.9 cm.) and 0.75 inches by 3.5 inches (1.9 cm. by 8.9 cm.). The leg support channel is accordingly approximately 9.3 cm. wide and 2.5 cm. deep. The interior corners of the channel are rounded to improve the gripping on the piece of lumber. The horizonal socket in the preferred form is also dimensioned to receive a "2-by-4" piece of lumber, making it roughly 4 cm. by 9.5 cm. The horizontal socket also has rounded interior corners to improve the gripping on the cross-piece.

In the preferred form, the horizontal socket 51 is formed by stamping out the appropriate form for the main part of the bracket from a single piece of metal and folding over corners 46 and 47 to form the socket. Accordingly, in order to preserve materials, there will be a gap between the two corners, rather than a continuous lower surface of the socket, although the lower surface of the socket could be made to form a complete rectangle when viewed from on-end.

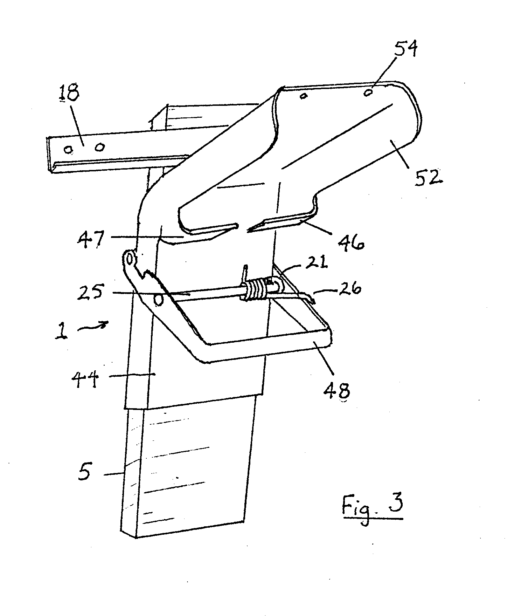

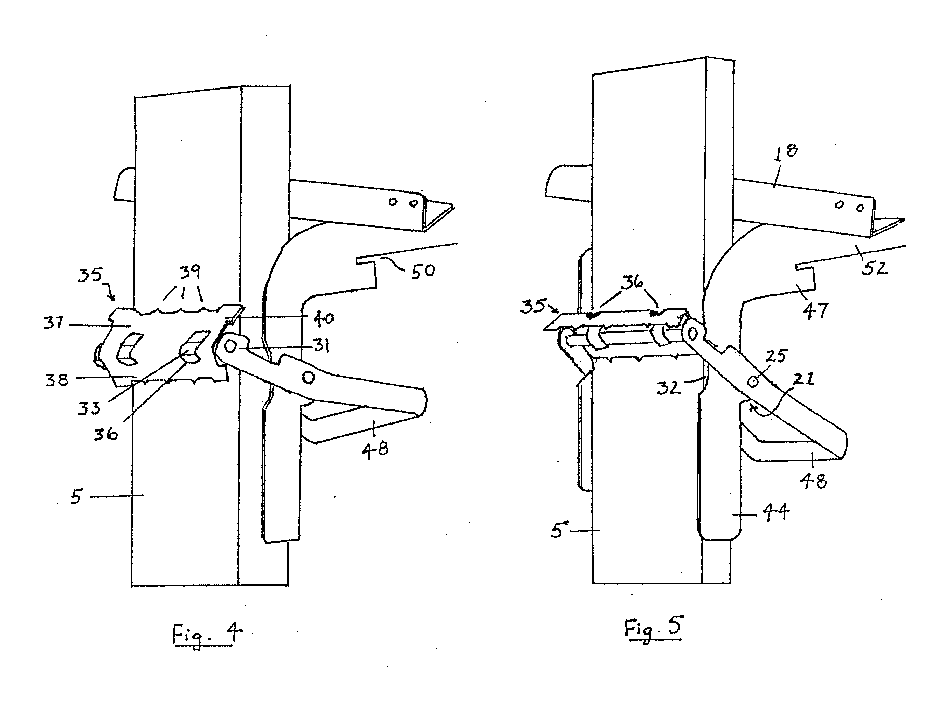

Extending from the socket 51 of bracket member 1 is a cross-member 52, which forms an open channel aligned with the upper interior surface of socket 51 and which has approximately the same width as socket 51 so as to receive cross-piece 53. Cross-member 52 provides additional support for the cross-piece 53 in socket 51. Holes 54 may be formed in the cross-member 52 to receive wood screws to secure the wooden cross-piece 53 in place. A further purpose of cross-member 52 is to permit the device to be used without a cross-piece 53 when the plank to be supported is narrower than the combined widths of two brackets. The cross-member 52 of bracket 1 is slightly narrower than cross-member 55 of bracket 2 so that cross-member 52 can telescope within cross-member 55. The lower edge of cross-member 55 is folded inwardly to form a channel (not shown) and this allows cross-member 52 to telescope within cross-member 55. With one of the cross-members telescoping within the other, the width of the work support brackets can be varied without cross-piece 53 and the width of the brackets can be fixed by utilizing screws or bolts through holes in cross-member 55, such as are shown at 54. Notches 50 (shown in Figure 4) may be formed in bracket member 1 to increase the distance which the two brackets can telescope.

Stops 18, formed of angle bars or irons, are fixed to each bracket by bolts or welding. Such stops are positioned to rest against the sides of the supported plank or platform and have holes to receive wood screws to secure the plank in place. The vertical portion of the angle bars also serves to form a surface against which the top of the leg members can be braced, while the horizontal portion is secured to the upper surface of the bracket.

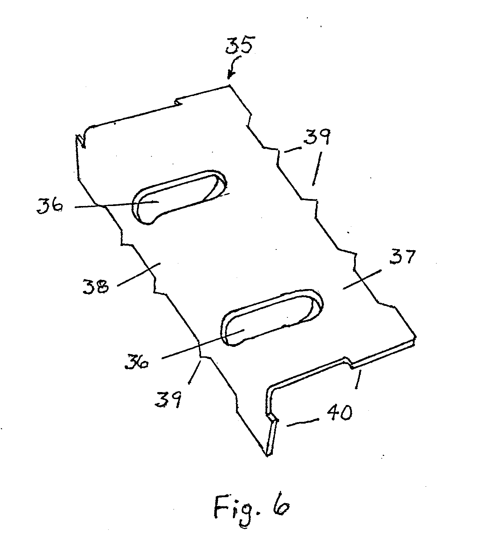

The leg members 5 are clamped securely in place by clamp members as shown in Figures 4, 5 and 6. Lugs 21 are stamped from leg supports 44 and are provided with holes to receive shaft 25. U-shaped handle 48 rotates on shaft 25. The ends of handle 48 are also provided with holes 31 to receive a second shaft 33. Clamp member 35 pivots on shaft 33, forced into a closed position by spring 26 on shaft 25. Clamp member 35 has two cut-outs 36 which are bent to receive shaft 33 to form a hinge. Clamp member 35 itself is bent at approximately 90°, forming two surfaces 37 and 38, surface 37 being wider than surface 38, and each surface having teeth 39 along its edge.

Each of the surfaces 37 and 38 has side extensions 40 which extend beyond the edges of handle 48 and accordingly the clamp member is free to rotate only between two extreme positions in which such extensions 40 bear against the handle. In one extreme position, shown in Figure 4, both rows of teeth lie in a plane parallel to the back surface 43 of leg support member 44. In the other extreme position, shown in Figure 5, the wider surface 37 extends approximately perpendicularly to the back surface 43.

When a leg member of greater thickness is used, the configuration shown in Figure 4 is selected, with both rows of teeth engaging and digging into the surface of the wooden leg support due to the force of a spring 26. This provides a more stable leg clamping arrangement than previous brackets as the leg is secured along two parallel rows of teeth rather than only one. The teeth 39 may be angled inwardly somewhat with respect to surfaces 37 and 38 in order to increase the bite into the wood. For example, when the clamp is in the configuration shown in Figure 4, an inward angle for the teeth with respect to the clamp member of 30 to 60 degrees results in the teeth contacting the leg surface approximately at right angles for optimum penetration. To secure a thinner leg member, the configuration shown in Figure 5 is utilized. The clamp member 35 is rotated to the second extreme position. Cut-outs 32 in leg support 44 permit surface 37 to be aligned approximately perpendicularly to the leg and to bite into and secure the leg in place, again due to the force exerted by spring 26.

Referring again to Figures 1 and 2, to construct a working platform, saw horse, picnic table or the like, four bracket members, one for each leg, are used. The width between each member of a pair of brackets is selected according to the width of the plank or platform to be supported or the separation of the parallel horizontal framework members.

Cross-piece 53 is selected to provide this width between angle bars 18. If the width is sufficiently narrow, the cross-piece can be dispensed with, and cross-members 52 and 55 are telescoped together. If a cross-piece 53 is used, it is secured to the brackets by wood screws through holes 54. The horizontal plank or platform is laid between angle bars 18 and can be secured also to the angle bars by screws through holes 57. Similarly, in the case of a support framework, one end of a first plank is secured to angle bar 18 on bracket member 52 and one end of a second plank is secured to the angle bar on bracket member 55. The opposite ends of the planks are secured to the second pair of bracket members in the same way to form a rectangular framework.

Four leg pieces of standard-sized lumber ("1-by-4" or "2-by-4") are selected and inserted into the channels of leg supports 44. U-shaped handle 48 is forced upwardly to move the clamp member away from leg support 44 and to allow each leg to be positioned in the channel. The orientation of the clamp member is selected, as described above, according to the thickness of the leg, and the handle is then released to allow the teeth 39 to bite into the wood. As in prior brackets, the relative lengths of the legs may be adjusted to make the platform level on uneven ground, or sloping. The tops of the legs may bear against either the upper edge of angle bars 18 or the supported platform in order to provide additional stability to the legs. Also to provide stability, the brackets are configured so that the legs slope down, out and away from the supported horizontal plank. As shown in Figure 3, leg support 44 is connected to sockets 51 and cross-member 52 so that an angle is formed both with respect to a vertical plane perpendicular to the length of cross-member 52 and with respect to a vertical plane parallel to the length of the cross-member.

The brackets of the present invention may be used to construct a knock-down picnic table. In this configuration, no cross-piece 53 is required. Further, no cross-member 52 or 55 need be present. The angle bars 18 are secured directly to extended horizontal table supports such as short rectangular wooden slabs which are attached to the underside of the table top by screws, bolts or the like at the four corners of the table. Legs can then be adjustably secured in the brackets as previously described. Alternatively, the table can be strengthened using cross-pieces 53 between the supports, and in this case the brackets may include cross-members 52 and 55 as in the preferred configuration.

It will be apparent that the bracket of the present invention can be utilized to construct frameworks generally for such uses as supporting a plastic sheet cover to construct a temporary greenhouse or shelter. For this application, cross-pieces of considerable width are utilized between pairs of brackets, and rather than supporting a single platform, two parallel boards are supported and secured between the two pairs of brackets, as described above. The four legs are adjusted to the proper height, and a plastic sheet may be secured over the horizontal framework as desired.

As will be apparent to persons skilled in the art, various modifications and adaptations of the structure above-described are possible without departure from the spirit of the invention, the scope of which is defined in the appended claims.

## Claims

1. A work support bracket member for constructing a support for supporting a substantially horizontal member between two pairs of said work support bracket members, said bracket member comprising:

a) A socket member adapted to receive one end of a cross-piece for connecting said bracket member to the second bracket member of a first one of said two pairs of bracket members;

b) A leg support member secured to and extending downwardly and outwardly from said socket member;

c) Clamping means to secure a leg in said leg support member; and

d) Means for maintaining said horizontal member in position on said bracket member.

2. The work support bracket member of claim 1 wherein said leg support member comprises an open-faced channel member opening in the direction opposite from said socket member, and said clamping means comprises:

a) A handle pivotally mounted on said leg support member;

b) A clamping member mounted on said handle comprising two substantially perpendicular sides of unequal width and adapted to pivot between two clamping positions, a first clamping position wherein the edges of both of said sides are positioned to engage said leg and a second position wherein only the edge of the longer of said two sides is positioned to engage said leg;

c) Means on said clamping member to abut said handle and thereby prevent rotation of said clamping member beyond said two clamping positions; and

d) Means urging said handle into a position where said clamping member engages said leg.

3. The work support bracket member of claim 2 wherein said clamping member further comprises a tooth on an edge of one of said sides for engaging said leg.

4. The work support bracket member of claim 1 wherein said means for maintaining said horizontal member in position on said bracket member comprises an angle bar secured to said bracket and positioned to abut a side of said horizontal member with a vertical side of said angle bar.

5. The work support bracket member of claim 1 further comprising a cross-member extending horizontally from said socket whereby the cross-member of the first bracket member of said first pair of bracket members is adapted to telescope within the cross-member of said second bracket member of said first pair of bracket members.

6. The work support bracket member of claim 5 further comprising means for securing said cross-member of said first bracket member in a fixed position within said cross-member of said second bracket member.

Fig. 1

0 220 351

Fig. 2

0 220 351

Fig. 3

Fig. 4

Fig 5

0 220 351

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 410 330  (ASHENFELTER)<br>* Figure 1 * | 1 | E 04 G     1/34<br>F 16 M   11/00<br>B 25 H     1/06 |
| X | CH-A-  380 352  (PEDROLI)<br>* Figure 1 * | 1 | |
| X | US-A-2 753 222  (FORESTA)<br>* Column 1, lines 69-72; figure 1 * | 1,4 | |
| X | US-A-3 175 642  (NEELEY)<br>* Figure 1 * | 1,4 | |
| X | US-A-3 713 512  (REECE)<br>* Figure 1 * | 1 | |
| A | <br>* Figure 3 * | 2 | **TECHNICAL FIELDS SEARCHED (Int. Cl.4)** |
| X | EP-A-0 015 400  (BLACK & DECKER)<br>* Figures 1,2 * | 1 | E 04 G<br>B 25 H<br>F 16 M |
| A | | 2 | |
| D,A | US-A-4 502 565  (KOFFSKI) | 1,2 | |
| D,A | US-A-4 296 835  (KOFFSKI) | 1,2 | |
| | ---                    -/- | | |

The present search report has been drawn up for all claims

| Place of search | Date of completion of the search | Examiner |
|---|---|---|
| THE HAGUE | 30-06-1986 | LOKERE H.P. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| D,A | US-A-4 228 871 (KOFFSKI) | 1,2 | |

-----

TECHNICAL FIELDS
SEARCHED (Int. Cl.4)

The present search report has been drawn up for all claims

| Place of search | Date of completion of the search | Examiner |
|---|---|---|
| THE HAGUE | 30-06-1986 | LOKERE H.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82